# EUROPEAN PATENT SPECIFICATION

(11) **EP 4 164 216 B1**
(45) Date of publication and mention of the grant of the patent: **25.03.2026**
(21) Application number: 21837016.1
(22) Date of filing: 02.06.2021
(51) Int. Cl.: H04L 65/1069, H04L 65/1096, H04N 7/14, H04N 7/15

(54) **METHOD AND APPARATUS FOR ESTABLISHING MULTIMEDIA CALL, AND ELECTRONIC DEVICE**
VERFAHREN UND VORRICHTUNG ZUR HERSTELLUNG EINES MULTIMEDIA-ANRUFS UND ELEKTRONISCHE VORRICHTUNG
PROCÉDÉ ET APPAREIL POUR ÉTABLIR UN APPEL MULTIMÉDIA, ET DISPOSITIF ÉLECTRONIQUE

(30) Priority: 06.07.2020 CN 202010641932
(43) Date of publication of application: 12.04.2023
(73) Proprietor: BEIJING BYTEDANCE NETWORK TECHNOLOGY CO., LTD., Beijing 100041 (CN)
(72) Inventor: XIA, Zhengdong, Beijing 100190 (CN)
(74) Representative: Marks & Clerk LLP
(86) International application number: PCT/CN2021/097963
(87) International publication number: WO 2022/007553

(56) References cited:
- CN-A- 101 094 280
- CN-A- 101 390 362
- CN-A- 104 469 662
- CN-A- 105 721 389
- CN-A- 108 881 779
- CN-A- 111 818 291
- US-A1- 2008 227 464
- US-A1- 2012 207 147
- US-A1- 2016 029 202
- US-A1- 2016 274 888

## Description

### FIELD

The embodiments of the present disclosure relate to the field of computer technology, and particularly to a method and an apparatus for establishing a multimedia call, and an electronic device.

### BACKGROUND

With the development of Internet technology, some applications (APP) provide functions of audio or video calls. In other words, a user can make an audio or video call with another user through the APPs.

In related technologies, a user can log in, by multiple terminals, an APP providing an audio or video call function. However, if the user is already in an audio or video call, the user cannot participate in another audio or video call.
US 2012/207147 A1 describes an instance of a client application enabling a first user terminal to access a packet-based communication system to conduct voice or video calls over a packet-based network. US 2008/227464 A1 describes a communication system in which a calling party calls a called party on a move and the called party performs a multimedia communication with the calling party, using the communication terminal of a business company providing a communication service. US 2016/029202 A1 describes methods and systems for communication history reconciliation amongst linked devices. In some embodiments, a method for communication history reconciliation amongst linked devices may include receiving an incoming communication request directed to a communication identifier associated with a user account, transmitting the communication request to at least a first device and a second device associated with the user account, receiving, responsive to the communication request, a message from the first device indicating that the first device has accepted the communication request to establish a call and transmitting, to the second device, an indication that the communication request was accepted by the first device.

### SUMMARY

This summary is provided to introduce the idea in a simplified form. The idea will be described in detail in the following description. This summary is neither intended to identify key features or essential features of the claimed technical solution, nor intended to be used to limit the scope of the claimed technical solution.

According to embodiments of the present disclosure, a method and an apparatus for establishing a multimedia call and an electronic device are provided, which achieve that a user conducts multimedia calls through a first terminal and a second terminal at the same time.

In a first aspect, a method for establishing a multimedia call is provided according to embodiments of the present disclosure. The method includes: determining whether a second terminal is in a multimedia call according to terminal identification information of the second terminal used by a user logged in a target application, in response to that a target multimedia call to be established in association with the user is triggered in a state that a first terminal used by the user logged in the target application is in a multimedia call; and establishing the target multimedia call based on an answering operation performed by a called party of the target multimedia call, in response to that the second terminal is not in any multimedia call.

In a second aspect, an apparatus for establishing a multimedia call is provided according to embodiments of the present disclosure. The apparatus includes: a first determining unit, configured to determine whether a second terminal is in a multimedia call according to terminal identification information of the second terminal used by a user logged in a target application, in response to a target multimedia call to be established in association with the user is triggered in a state that a first terminal used by the user logged in the target application is in a multimedia call; and an establishing unit, configured to establish the target multimedia call based on an operation of answering the target multimedia call performed by a called party in response to that the second terminal is not in any multimedia call.

In a third aspect, an electronic device is provided according to embodiments of the present disclosure, including: one or more processors; and a storage for storing one or more programs, where the one or more programs, when executed by the one or more processors, cause the one or more processors to implement the method according to the first aspect.

In a fourth aspect, a computer-readable storage medium is provided according to embodiments of the present disclosure, storing computer instructions, where the computer instructions, when being executed by a processor, cause the processor to perform the method according to the first aspect.

With the method and apparatus for establishing a multimedia call and the electronic device provided according to embodiments of the present disclosure, in a state that the first terminal used by the user logged in the target application is in a multimedia call, it is determined whether a target multimedia call to be established in association with the user is triggered. Further, in response to that the target multimedia call to be established in association with the user is triggered, it is determined whether the second terminal is in a multimedia call according to the terminal identification information of the second terminal used by the user logged in the target application. Then, in response to that the second terminal is not in any multimedia call, the target multimedia call is established based on an answering operation performed by a called party of the target multimedia call. Thereby, the second terminal can participate in the target multimedia call. In practice, the target multimedia call may be the same as or different from the multimedia call that the first terminal is in. As a result, the second terminal and the first terminal can participate in the same multimedia call or different multimedia calls at the same time. In other words, the user can conduct multimedia calls through the second and first terminals at the same time, thereby improving the user experience of multimedia calls.

### BRIEF DESCRIPTION OF THE DRAWINGS

The above and other features, advantages and aspects of various embodiments of the present disclosure will become more clear when taken in conjunction with the accompanying drawings and with reference to the following detailed description. Throughout the drawings, the same or similar reference numbers refer to the same or similar elements. It should be understood that the drawings are schematic and that the units and elements are not necessarily drawn to scale.
Figure 1 is a flowchart of a method for establishing a multimedia call according to some embodiments of the present disclosure;
Figures 2A and 2B show application scenarios of a method for establishing a multimedia call according to the present disclosure;
Figure 3 is a flowchart of a method for establishing a multimedia call according to some other embodiments of the present disclosure;
Figure 4 is a sechematic structual diagram of an apparatus for establishing a multimedia call according to some embodiments of the present disclosure;
Figure 5 shows a sechematic system architecture for applying a method for establishing a multimedia call according to some embodiments of the present disclosure; and
Figure 6 is a sechematic structual diagram of an electronic device according to some embodiments of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be embodied in various forms and should not be construed as being limited to the embodiments set forth herein. The embodiments are provided for a more thorough and complete understanding. It should be understood that the drawings and embodiments of the present disclosure are only provided as examples, and are not intended to limit the protection scope of the present disclosure.

It should be understood that the various steps described in the method embodiments of the present disclosure may be performed in different orders and/or in parallel. Furthermore, method embodiments may include additional steps and/or omit an illustrated step. The scope of the present disclosure is not limited in this regard.

As used herein, the terms "including" and "comprising" and variations thereof are non-exclusive, i.e., meaning "including but not limited to". The term "based on" means "at least partially based on". The term "an embodiment" means "at least one embodiment", the term "another embodiment" means "at least one another embodiment", and the term "some embodiments" means "at least some embodiments". Relevant definitions of other terms will be given in the description below.

It should be noted that concepts such as "first" and "second" mentioned in the present disclosure are only used to distinguish different devices, modules or units, and are not used to limit the order or interdependence of functions performed by these devices, modules or units.

It should be noted that the modifications of "a" and "a plurality" mentioned in the present disclosure are illustrative rather than restrictive, and those skilled in the art should understand that unless clearly indicated otherwise, they should be understood as "one or more".

The names of messages or information exchanged between multiple devices in the embodiments of the present disclosure are only for illustrative purposes, and are not intended to limit the scope of these messages or information.

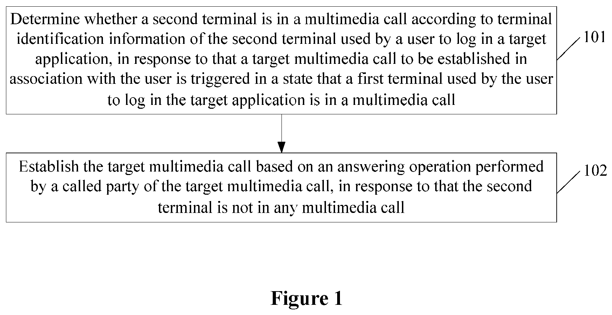

Figure 1 shows a flowchart of a method for establishing a multimedia call according to some embodiments of the present disclosure. As shown in Figure 1, the method for establishing a multimedia call includes the following steps 101 and 102.

In step 101, it is determined whether a second terminal is in a multimedia call according to terminal identification information of the second terminal used by a user logged in a target application, in response to a target multimedia call to be established in association with the user is triggered in a state that a first terminal used by the user logged in the target application is in a multimedia call.

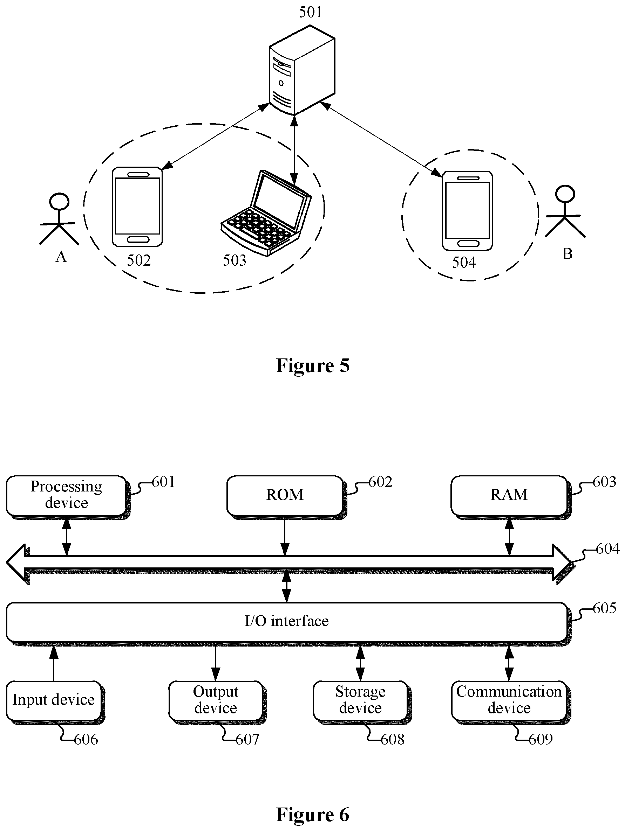

In this embodiment, in a state that the first terminal (for example, the terminal 503 shown in Figure 5) used by the user logged in the target application is in a multimedia call, the second terminal (for example, the terminal 502 shown in Figure 5) may determine whether a target multimedia call to be established in association with the user is triggered.

The target application may be an application that provides the target multimedia call.

Both the second terminal and the first terminal can be the terminals used by the user logged in the target application. In other words, users can log in the target application by both the second and first terminals at the same time. It should be noted that the first terminal is one or more terminals other than the second terminal.

It is understood that the target multimedia call is a multimedia call associated with the user. In practice, the target multimedia call may be a video or audio call. It should be noted that the target multimedia call may be the same as or different from the multimedia call that the first terminal is in.

In some scenarios, the second terminal may monitor, through a built-in monitoring program, whether the target multimedia call to be established in association with the user is triggered.

In this embodiment, in response to that the target multimedia call is triggered, the second terminal determines whether it is in a multimedia call based on its own terminal identification information.

The terminal identification information is information uniquely identifying the terminal. For example, the terminal identification information may be the serial number of the terminal.

In some scenarios, the second terminal may send its terminal identification information to a server (for example, the server 501 shown in Figure 5). In practice, the server stores the terminal identification information of a terminal in association with paticipating information indicating whether the terminal is in a multimedia call. Further, the server may determine whether the second terminal is in a multimedia call according to the paticipating information stored in association with the terminal identification information of the second terminal. Further, the second terminal may determine whether the second terminal is in a multimedia call based on a feedback result from the server.

In step 102, the target multimedia call is established based on an answering operation performed by a called party of the target multimedia call, in response to that the second terminal is not in any multimedia call.

In this embodiment, in response to that the second terminal is not in any multimedia call, the second terminal establishes the target multimedia call based on an operation of answering the target multimedia call performed by a called party.

It is understood that the called party is the party called by target multimedia call. For example, if user A initiates a target multimedia call to user B, user A is the initiator of the target multimedia call, and correspondingly user B is the called party of the target multimedia call.

The above answering operation is an operation of answering the target multimedia call. For example, the answering operation may be a triggering operation on a control element for answering the target multimedia call. For another example, the answering operation may be inputting a voice for answering the target multimedia call.

In some scenarios, the user is the called party of the target multimedia call. In response to the answering operation performed by the user, the second terminal establishes the target multimedia call.

In other scenarios, the user is the initiator of the target multimedia call. In response to receiving information indicating that the called party of the target multimedia call performs an answering operation, the second terminal establishes the target multimedia call.

As described in the background, in related technologies, a user can log in an APP providing an audio or video call function by multiple terminals. However, if the user is already in an audio or video call, the user cannot participate in another audio or video call. Therefore, the user cannot participate in multiple audio or video calls at the same time through the APP, resulting in a poor user experience of audio or video calls.

In this embodiment, the user can log in the target application by the second terminal and the first terminal at the same time. In a state that the first terminal used by the user logged in the target application is in a multimedia call, the second terminal can determine, in response to a target multimedia call to be established in association with the user is triggered, whether the second terminal is in a multimedia call according to the terminal identification information of the second terminal. Then, in response to that the second terminal is not in any multimedia call, the second terminal establishes the target multimedia call based on an answering operation performed by a called party of the target multimedia call. It is understood that when determining that it is not in any multimedia call according to its terminal identification information, the second terminal can participate in the target multimedia call by establishing the target multimedia call. In practice, the target multimedia call may be the same as or different from the multimedia call that the first terminal is in. As a result, the second terminal and the first terminal can participate in the same multimedia call or different multimedia calls at the same time. In other words, the user can conduct multimedia calls through the second and first terminals at the same time, thereby improving the user experience of multimedia calls.

In some embodiments, the first terminal keeps being in the multimedia call in response to that the second terminal establishes the target multimedia call.

When the second terminal establishes the target multimedia call, the second terminal participates in the target multimedia call.

As can be seen from the above, the second and first terminals are both terminals used by the user logged in the target application. Therefore, the second terminal is in the target multimedia call while the first terminal keeps being in the multimedia call, achieving that the user makes multimedia calls at the same time by the second and first terminals.

In some embodiments, the user is the initiator of the target multimedia call. In this case, the second terminal may establish the target multimedia call in the following manner.

In a first step, an establishing request for the target multimedia call is sent to a called party of the target multimedia call.

It is understood that the called party is the party called by the target multimedia call. In other words, the target multimedia call is a multimedia call initiated by the user to the called party.

In some scenarios, the second terminal may send, through a server (for example, the server 501 shown in Figure 5), the establishing request for the target multimedia call to the terminal used by the called party logged in the target application.

In practice, in response to the establishing request, the terminal used by the called party logged in the target application displays prompt information indicating that the user initiates the target multimedia call to the called party.

The prompt information is information for prompting that the user initiates the target multimedia call to the called party.

In a second step, the target multimedia call is established in response to an answering operation performed by the called party on the prompt information.

In some scenarios, the above prompt information includes a control element for answering the target multimedia call. The answering operation may be a trigger operation on the control element.

It is understood that, in response to the answering operation performed by the called party, the terminal that detects the answering operation can establish the target multimedia call with the second terminal. That is, the second terminal can establish the target multimedia call with the terminal that detects the anwering operation.

In these embodiments, the user initiates the target multimedia call to the called party through the second terminal. When the called party perform the answering operation for answering the target multimedia call, the user can use the second terminal to conduct the multimedia call with the called party while keeping the multimedia call made by the user through the first terminal.

In some embodiments, the user is the called party of the target multimedia call. In this case, the second terminal may establish the target multimedia call in the following manner.

In a first step, prompt information indicating that an initiator of the target multimedia call initiates the target multimedia call is displayed.

The prompt information is information prompting that an initiator initiates the target multimedia call to the user.

In a second step, the target multimedia call is established in response to an answering operation performed by the user on the prompt information.

In some scenarios, the above prompt information includes a control element for answering the target multimedia call. The answering operation may be a trigger operation on the control element.

It is understood that, in response to the answering operation performed by the called party, the second terminal can establish the target multimedia call with the terminal by which the initiator initiates the target multimedia call.

In these embodiments, the initiator initiates the target multimedia call to the user through the terminal by which the initiator logs in the target application. When the user perform the answering operation for answering the multimedia call, the user can conduct a multimedia call with the initiator through the second terminal, while keeping the multimedia call conducted by the user through the first terminal.

In some embodiments, the establishment of the target multimedia call is refused in response to that the second terminal is in a multimedia call.

In some scenarios, the user is the initiator of the target multimedia call. When the second terminal is in a multimedia call, by refusing to establish the target multimedia call initiated by the user, it is guaranteed that the user will not participate in multiple multimedia calls at the same time through the second terminal that logs in the target application.

In other scenarios, the user is the called party of the target multimedia call. When the second terminal is in a multimedia call, by refusing to establish the target multimedia call initiated by the initiator to the user, it is guaranteed that the user will not participate in multiple multimedia calls at the same time through the second terminal that logs in the target application.

In some embodiments, the target multimedia call is in a one-to-one calling mode or a one-to-multiple calling mode.

It is understood that the one-to-one calling mode is a mode that one party calls another one party. Correspondingly, the one-to-multiple calling mode is a mode that one party calls multiple other parties.

In these embodiments, by setting different calling modes, the user can establish multimedia calls in different modes.

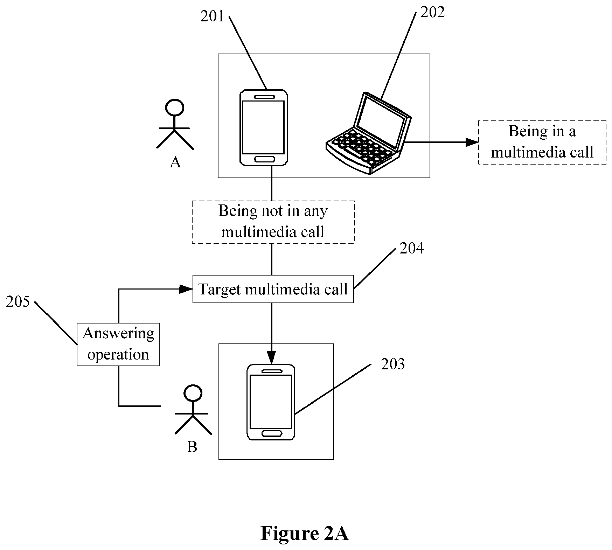

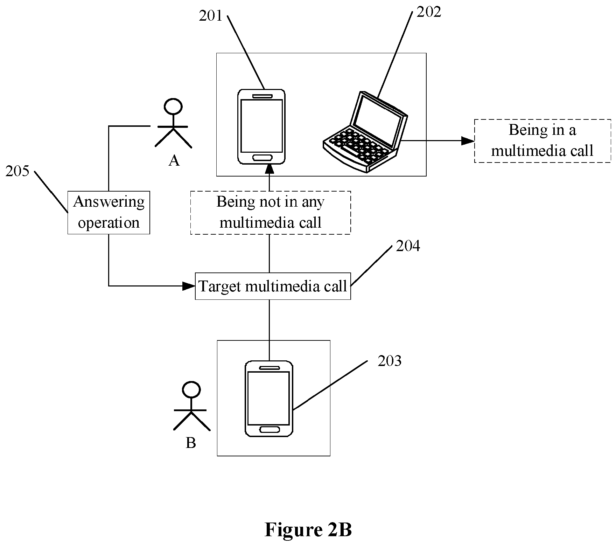

Figure 2A and Figure 2B shows application scenarios of a method for establishing a multimedia call according to embodiments of the present disclosure. Figure 2A and Figure 2B shows application scenarios of a method for establishing a multimedia call according to embodiments of the present disclosure. In Figure 2A and Figure 2B, user A logs in the target application through the second terminal 201 and first terminal 202. In addition, the first terminal 202 is in a multimedia call through the target application. User B logs in the target application through the terminal 203.

Referring to Figure 2A, the second terminal 201 receives the target multimedia call 204 initiated by user A to user B. The second terminal 201 determines whether it is in a multimedia call. In response to that it is not in any multimedia call, the second terminal 201 initiates a target multimedia call 204 to the terminal 203 used by the user B logged in the target application. When the user B performs the answering operation 205, the second terminal 201 establishes the target multimedia call 204 with the terminal 203.

Referring to Figure 2B, the second terminal 201 receives the target multimedia call 204 initiated by user B to user A through the terminal 203 used by the user B logged in the target application. The second terminal 201 determines whether it is in a multimedia call. In response to that it is not in any multimedia call, the second terminal 201 displays the prompt information indicating that the user B initiates the target multimedia call 204. When the user A performs the answering operation 205, the second terminal 201 establishes the target multimedia call 204 with the terminal 203.

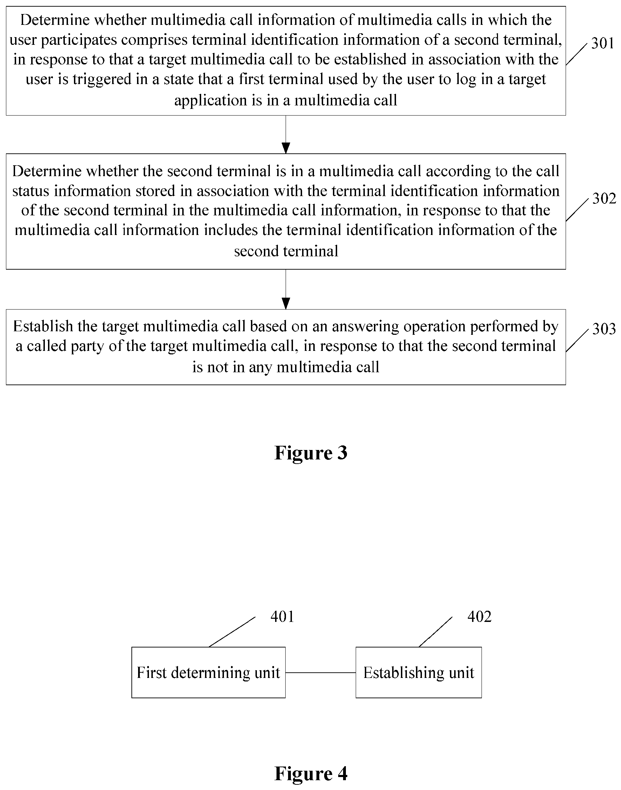

Figure 3 is a flowchart of a method for establishing a multimedia call according to some other embodiments of the present disclosure. As shown in Figure 3, the method for establishing a multimedia call includes the following steps 301 to 303.

In step 301, in a state that a first terminal used by the user logged in a target application is in a multimedia call, it is determined whether multimedia call information of multimedia calls in which the user participates comprises terminal identification information of a second terminal, in response to that a target multimedia call to be established in association with the user is triggered.

In this embodiment, in the state that the first terminal used by the user logged in the target application is in a multimedia call, the second terminal (for example, the terminal 502 shown in Figure 5) determines whether the target multimedia call to be established in association with the user is triggered.

In some scenarios, the second terminal may monitor, through a built-in monitoring program, whether the target multimedia call to be established in association with the user is triggered.

In this embodiment, in response to that the target multimedia call is triggered, the second terminal determines whether the multimedia call information of multimedia calls in which the user participates comprises the terminal identification information of the second terminal.

The multimedia call information may be infromation describing multimedia calls in which the user participates. In practice, in the multimedia call information, terminal identification information of terminals by which the user participates in the multimedia calls is stored in association with call status information.

The terminals by which the user participates in the multimedia calls are described below. For example, user A logs in the target application through a terminal T, and participates in a multimedia call through the target application. In this case, terminal T is a terminal by which the user participates in a multimedia call.

The terminal identification information is information uniquely identifying the terminal. For example, the terminal identification information may be the serial number of the terminal.

The call status information is information describing a call status of a terminal. In some scenarios, the call status includes: a status of being in a multimedia call, and a status of not being in a multimedia call.

In some scenarios, the multimedia call information also includes user identification information of the user. The user identification information may be information uniquely identifying the user. For example, the user identification information may be a user number.

In some scenarios, the user participates in multimedia calls through the target application installed in multiple terminals, that is, the user participates in multiple multimedia calls through the target application. Correspondingly, the second terminal can determine whether the multimedia call information of each multimedia call contains the terminal identification information of the second terminal.

In step 302, in response to that the multimedia call information includes the terminal identification information of the second terminal, it is determined whether the second terminal is in a multimedia call according to the call status information stored in association with the terminal identification information of the second terminal in the multimedia call information.

In this embodiment, in response to that the multimedia call information includes the terminal identification information of the second terminal, the second terminal can determine whether the second terminal is in a multimedia call according to the call status information stored in association with the terminal identification information of the second terminal in the multimedia call information.

It is understood that the call status information stored in association with the terminal identification information of the second terminal may describe the call status of the second terminal. Therefore, the second terminal can determine whether it is in a multimedia call.

In step 303, in response to that the second terminal is not in any multimedia call, the target multimedia call is established based on an answering operation performed by a called party of the target multimedia call.

The step 303 may be executed in a similar way as step 102 in the embodiment as shown in Figure 1. The above description of step 102 is also applicable to step 303, which will not be repeated here.

In this embodiment, in the multimedia call information of multimedia calls in which the user participate, terminal identification information of terminals by which the user participates in the multimedia calls is stored in association with call status information of the terminals. When the multimedia call information includes the terminal identification information of the second terminal, whether the second terminal is in a multimedia call is determined according to the call status information stored in association with the terminal identification information of the second terminal. That is, whether the second terminal is in a multimedia call is determined according to the call status information of the second terminal. In this way, a new method for determining whether the second terminal is in a multimedia call is provided.

In some embodiments, the call status indicated by the call status information includes any of any one of: a status of being in a multimedia call, a status of quitting from a multimedia call, a status of receiving a multimedia call initiated by another user, and a status of initiating a multimedia call to another user.

Quitting from a multimedia call means that a terminal exit the multimedia call without ending the multimedia call. For example, user A, user B, and user C participate in a same multimedia call respectivley through terminal T1, terminal T2, and terminal T3. When the terminal T1 of the user A exits the multimedia call, the terminal T2 and terminal T3 are still in the multimedia call. In this case, the terminal T1 is in the status of quitting from a multimedia call.

In these embodiments, by providing multiple call status, the status of the terminal can be fully described.

In some embodiments, it is determined that the second terminal is not in any multimedia call, in response to that the multimedia call information does not include the terminal identification information of the second terminal.

In these embodiments, in the multimedia call information, terminal identification information of terminals by which the user participates in the multimedia calls is stored in association with call status information. It can be seen that if the multimedia call information does not include the terminal identification information of the second terminal, the multimedia call information does not include the call status information of the second terminal. Therefore, the second terminal can be determined as not in any multimedia call.

In some embodiments, the multimedia call information is received from a server (for example, the server 501 shown in Figure 5). In addition, the server sends the multimedia call information to each terminal used by the user logged in the target application.

Since the second terminal is one of the terminals used by the user logged in the target application, the server sends the multimedia call information to the second terminal by sending the multimedia call information to each terminal used by the user logged in the target application.

In these embodiments, in the case that the user logs in the target application by multiple terminals, by sending the multimedia call information to each terminal used by the user logged in the target application, the multimedia call information is sent to the second terminal.

Referring to Figure 4, as implementations of the methods shown in the above figures, some embodiments of an apparatus for establishing a multimedia call are provided. The apparatus embodiments correspond to the method embodiments as shown in Figure 1. The apparatus can be applied to various electronic devices.

As shown in Figure 4, an apparatus for establishing a multimedia call according to an embodiment includes: a first determining unit 401 and an establishing unit 402. The first determining unit 401 is configured to determine whether a second terminal is in a multimedia call according to terminal identification information of the second terminal used by a user logged in a target application, in response to a target multimedia call to be established in association with the user is triggered in a state that a first terminal used by the user logged in the target application is in a multimedia call. The establishing unit 402 is configured to establish the target multimedia call based on an operation of answering the target multimedia call performed by a called party in response to that the second terminal is not in any multimedia call.

In this embodiment, for specific processes and technical effects of the first determining unit 401 and the establishing unit 402 of the apparatus for establishing a multimedia call, reference can be made to the relevant description of step 101 and step 102 of the embodiment as shown in Figure 1, which are not repeated herein.

In some embodiments, the first terminal keeps being in the multimedia call, in response to that the second terminal establishes the target multimedia call.

In some embodiments, the user is an initiator of the target multimedia call. The establishing unit 402 is further configured to send an establishing request for the target multimedia call to a called party of the target multimedia call, wherein a terminal used by the called party of the target multimedia call logged in the target application displays, in response to the establishing request, prompt information indicating that the user initiates the target multimedia call to the called party; and establish the target multimedia call in response to an answering operation performed by the called party on the prompt information.

In some embodiments, the user is the called party of the target multimedia call. The establishing unit 402 is further configured to display prompt information indicating that an initiator of the target multimedia call initiates the target multimedia call to the user; and establish the target multimedia call in response to an answering operation performed by the user on the prompt information.

In some embodiments, the apparatus for establishing a multimedia call may include a refusing unit (not shown). The refusing unit is configured to refuse to establish the target multimedia call in response to that the second terminal is in a multimedia call

In some embodiments, the target multimedia call is in a one-to-one calling mode or a one-to-multiple calling mode.

In some embodiments, the first determining unit 401 is further configured to: determine whether multimedia call information of multimedia calls in which the user participates comprises the terminal identification information of the second terminal, where in the multimedia call information, terminal identification information of terminals by which the user participates in the multimedia calls is stored in association with call status information; and determine, in response to that the multimedia call information comprises the terminal identification information of the second terminal, whether the second terminal is in a multimedia call according to the call status information stored in association with the terminal identification information of the second terminal in the multimedia call information..

In some embodiments, a call status indicated by the call status information comprises any one of: a status of being in a multimedia call, a status of quitting from a multimedia call, a status of receiving a multimedia call initiated by another user, and a status of initiating a multimedia call to another user.

In some embodiments, the apparatus for establishing a multimedia call may also include a second determining unit (not shown). The second determining unit is configured to determine that the second terminal is not in any multimedia call, in response to that the multimedia call information does not include the terminal identification information of the second terminal.

In some embodiments, the multimedia call information is received from a server. The server is configured to send the multimedia call information to each terminal used by the user logged in the target application.

Figure 5 shows a sechematic system architecture for applying a method for establishing a multimedia call according to some embodiments of the present disclosure.

As shown in Figure 5, the system architecture may include a server 501, a terminal 502, a terminal 503 and a terminal 504. Terminal 502 and terminal 503 are terminals used by the user logged in a target application. In addition, terminal 503 is in a multimedia call. Terminal 504 is a terminal used by user B logged in the target application.

The server 501 can communicate with the terminal 502, terminal 503, and terminal 504 through a network. The network may be in various connection types, such as wired or wireless communication links, or optical fiber cables.

Terminals 502, 503 and 504 are installed with the target application. For example, the target application is a multimedia call application.

In some scenarios, terminal 502 may receive a target multimedia call initiated by user B to user A through terminal 504. In response to the target multimedia call, the terminal 502 may determine whether it is in a multimedia call according to its own terminal identification information. In response to that it is not in any multimedia call, terminal 502 may establish a target multimedia call with terminal 504 based on an answering operation performed by user A.

In some other scenarios, terminal 502 may receive a target multimedia call initiated by user A to user B. In response to the target multimedia call, terminal 502 may determine whether it is in a multimedia call according to its own terminal identification information. In response to that it is not in any multimedia call, terminal 502 may establish the target multimedia calls with terminal 504 based on an answering operation performed by user B.

Terminals 502, 503 and 504 may be implemented in hardware or software. When being implemented in hardware, terminals 502, 503 and 504 may be various electronic devices having display screens and supporting information interaction, including but not limited to smartphones, tablets, lap-top portable computers and desktop computers. When being implemented in software, terminals 502, 503 and 504 may be installed in the electronic devices listed above, and may be implemented as multiple software or software modules, or be implemented as a single software or software module, which are not limited herein.

Server 501 may be a server that provides various services. In some scenarios, when the user B initiates the target multimedia call to the user A through the terminal 504, the server 501 may forward an establishing request for the target multimedia call to terminals 502 and 503 used by the user A logged in the target application.

Server 501 may be implemented in hardware or software. When being implemented in hardware, the server 501 may be implemented as a distributed server cluster composed of multiple servers, or implemented as a single server. When being implemented in software, the server 501 may be implemented as multiple software or software modules (for example, multiple software or software modules used to provide distributed services), or implemented as a single software or software module, which is not limited herein.

It should be noted that the method for establishing a multimedia call in the present disclosure may be executed by the terminal 502. Correspondingly, the apparatus for establishing a multimedia call may be arranged in the terminal 502.

It should be understood that the numbers of the terminals and servers in Figure 5 are only for illustration. Any numbers of terminals and servers may be implemented according to actual needs.

Figure 6 shows a schematic structural diagram of an electronic device (for example, the terminal 502 in Figure 5) suitable for implementing the embodiments of the present disclosure. Terminals in the embodiments of the present disclosure may include, but are not limited to, mobile terminals, such as mobile phones, notebook computers, digital broadcast receivers, PDAs (Personal Digital Assistants), PADs (Tablet computers), PMPs (Portable Multimedia Players), vehicle-mounted terminals (such as in-vehicle navigation terminals), and the like, and fixed terminals such as digital TVs, desktop computers, and the like. The electronic device shown in Figure 6 is only an example, and should not impose any limitation on the functions and applications of the embodiments of the present disclosure. The electronic device shown in Figure 6 is only an example, and should not impose any limitation on the functions and applications of the embodiments of the present disclosure.

As shown in Figure 6, the electronic device 600 may include a processing device (such as a central processing unit, a graphics processor) 601 that may execute various appropriate actions and processes according to a program stored in a read only memory (ROM) 602 or loaded into random access memory (RAM) 603 from a storage device 608. In the RAM 603, various programs and data necessary for the operation of the electronic device 400 are also stored. The processing device 601, the ROM 602, and the RAM 603 are connected to each other through a bus 604. An input/output (I/O) interface 605 is also connected to the bus 604.

Normally, the following devices may be connected to the I/O interface 605: an input device 606 such as a touch screen, a touchpad, a keyboard, a mouse, a camera, a microphone, an accelerometer, a gyroscope and the like; an output device 607, such as a liquid crystal display (LCD), a speaker, a vibrator and the like; a storage device 608, such as a magnetic tape, a hard disk and the like; and a communication device 609. The communication device 609 may enable the electronic device to communicate in a wireless or wired manner with other devices to exchange data. Although Figure 6 shows the electronic device having various means, it should be understood that not all of the illustrated means are required to be implemented or provided. More or fewer devices may alternatively be implemented or provided. Each block in Figure 6 may represent one device or multiple devices as required.

In particular, according to embodiments of the present disclosure, the processes described above with reference to the flowcharts may be implemented as computer software programs. For example, embodiments of the present disclosure include a computer program product including a computer program carried on a non-transitory computer readable medium. The computer program includes program code for performing the method illustrated in the flowchart. In such an embodiment, the computer program may be downloaded and installed from the network via the communication device 609, or from the storage device 608, or from the ROM 602. When the computer program is executed by the processing device 601, the above-mentioned functions in the methods of the embodiments of the present disclosure are executed.

It should be noted that the computer-readable medium mentioned above in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of computer readable storage media may include, but are not limited to, electrical connections with one or more wires, portable computer disks, hard disks, a random access memory (RAM), a read only memory (ROM), an erasable Programmable read only memory (EPROM or flash memory), a optical fiber, a portable compact disk read only memory (CD-ROM), optical storage devices, magnetic storage devices, or any suitable combination thereof. In this disclosure, a computer-readable storage medium may be any tangible medium that contains or stores a program that can be used by or in conjunction with an instruction execution system, apparatus or device. In the present disclosure, a computer-readable signal medium may include a data signal propagated in baseband or as part of a carrier wave with computer-readable program code embodied thereon. Such propagated data signals may be in a variety of forms, including but not limited to electromagnetic signals, optical signals, or any suitable combination thereof. A computer-readable signal medium can also be any computer-readable medium other than a computer-readable storage medium that can transmit, propagate, or transport the program for use by or in connection with the instruction execution system, apparatus or device. Program code stored on a computer readable medium may be transmitted using any suitable medium including, but not limited to, an electrical wire, an optical fiber cable, RF (radio frequency), or any suitable combination thereof.

In some embodiments, the client and server may use any currently known or future network protocol such as HTTP (HyperText Transfer Protocol) to communicate, and may be connected with digital data network in any form or medium (such as a communication network). Examples of communication networks include local area networks (LAN), wide area networks (WAN), the Internet (eg, the Internet), and peer-to-peer networks (such as ad hoc peer-to-peer networks), as well as any current or future network.

The above-mentioned computer-readable medium may be included in the above-mentioned electronic device, or may exist alone without being assembled into the electronic device. The above-mentioned computer-readable medium carries one or more programs. The above-mentioned one or more programs, when being executed by the electronic device, cause the electronic device to: determine whether a second terminal is in a multimedia call according to terminal identification information of the second terminal used by a user logged in a target application, in response to that a target multimedia call to be established in association with the user is triggered in a state that a first terminal used by the user logged in the target application is in a multimedia call; and establish the target multimedia call based on an answering operation performed by a called party of the target multimedia call, in response to that the second terminal is not in any multimedia call.

Computer program code for performing operations of the present disclosure may be written in one or more programming languages, including but not limited to object-oriented programming languages,such as Java, Smalltalk, C++, and conventional procedural programming languages, such as the "C" language or similar programming languages. The program code may be executed entirely on a user computer, or partly on a user computer, or as a stand-alone software package, or partly on a user computer and partly on a remote computer, or entirely on a remote computer or server. In the case of using a remote computer, the remote computer may be connected to the user's computer through any kind of network, including a local area network (LAN) or a wide area network (WAN), or may be connected to an external computer (eg, using Internet connection provided by an Internet service provider).

The flowchart and block diagrams in the figures illustrate the architecture, functionality, and operations of possible implementations of systems, methods and computer program products according to various embodiments of the present disclosure. In this regard, each block in the flowcharts or block diagrams may represent a module, program segment, or a portion of code that contains one or more executable instructions for implementing the specified logical functions. It should also be noted that, in some alternative implementations, the functions noted in the blocks may occur in an order other than the order shown in the figures. For example, two blocks shown in succession may be executed substantially concurrently, or the blocks may sometimes be executed in the reverse order, depending upon the functionality involved. It is also noted that each block of the block diagrams and/or flowchart illustrations, and combinations of blocks in the block diagrams and/or flowchart illustrations, may be implemented in dedicated hardware-based systems that perform the specified functions or operations, or may be implemented by a combination of dedicated hardware and computer instructions.

The units involved in the embodiments of the present disclosure may be implemented in a software manner, or in a hardware manner. The name of the unit does not constitute a limitation of the unit under any circumstances. For example, the establishing unit may be described as a unit for establishing the target multimedia call based on an answering operation performed by a called party of the target multimedia call, in response to that the second terminal is not in any multimedia call.

The functions described above may be performed, at least in part, by one or more hardware logic components. For example, without limitation, examples of hardware logic components that may be used include: a Field Programmable Gate Array (FPGA), a Application Specific Integrated Circuit (ASIC), an Application Specific Standard Product (ASSP), a System on Chip (SOC), a Complex Programmable Logical Device (CPLD) and the like.

In the present disclosure, a machine-readable medium may be a tangible medium that may contain or store a program for use by or in connection with the instruction execution system, apparatus or device. The machine-readable medium may be a machine-readable signal medium or a machine-readable storage medium. Machine-readable media may include, but are not limited to, electronic, magnetic, optical, electromagnetic, infrared, or semiconductor systems, devices, or devices, or any suitable combination thereof. More specific examples of machine-readable storage media include one or more wire-based electrical connections, portable computer disks, hard disks, random access memory (RAM), read only memory (ROM), erasable programmable read only memory (EPROM or flash memory), fiber optics, compact disk read only memory (CD-ROM), optical storage devices, magnetic storage devices, or any suitable combination thereof.

While the disclosure has been shown and described with reference to various embodiments thereof, it will be understood by those skilled in the art that various changes in form and details may be made therein without departing from the scope of the disclosure as defined by the appended claims.

## Claims

1. A method for establishing a multimedia call, comprising:
determining (101) whether a second terminal (201) is in any multimedia call based on terminal identification information of the second terminal logged in a target application by a user, in response to a target multimedia call (204) to be established in association with the user being triggered while a first terminal (202) used by the user logged in the target application is in a multimedia call, wherein a state of the first terminal being in the multimedia call is determined based on information of the multimedia call, wherein the information of the multimedia call comprises identification information of the first terminal in association with call status information of the first terminal, and wherein the target multimedia call is different from the multimedia call; and
establishing (102) the target multimedia call based on an answering operation (205) performed by a called party of the target multimedia call, in response to determining that the second terminal is not in any multimedia call wherein the multimedia call and the target multimedia call are conducted through the first terminal and the second terminal, respectively.

2. The method according to claim 1, wherein the first terminal keeps being in the multimedia call, in response to that the second terminal establishes the target multimedia call.

3. The method according to claim 2, wherein the user is an initiator of the target multimedia call; and
the establishing the target multimedia call based on an answering operation performed by a called party of the target multimedia call comprises:
sending an establishing request for the target multimedia call to a called party of the target multimedia call, wherein a terminal used by the called party of the target multimedia call logged in the target application displays, in response to the establishing request, prompt information indicating that the user initiates the target multimedia call to the called party; and
establishing the target multimedia call in response to an answering operation performed by the called party on the prompt information.

4. The method according to claim 2, wherein the user is the called party of the target multimedia call; and
the establishing the target multimedia call based on an answering operation performed by a called party the target multimedia call comprises:
displaying prompt information indicating that an initiator of the target multimedia call initiates the target multimedia call to the user; and
establishing the target multimedia call in response to an answering operation performed by the user on the prompt information.

5. The method according to claim 1, further comprising:
refusing to establish the target multimedia call in response to that the second terminal is in a multimedia call.

6. The method according to any one of claims 1 to 5, wherein the target multimedia call is in a one-on-one calling mode or a one-to-multiple calling mode.

7. The method according to any one of claims 1 to 5, wherein the determining whether the second terminal is in a multimedia call according to terminal identification information of the second terminal used by a user logged in a target application comprises:
determining whether multimedia call information of multimedia calls in which the user participates comprises the terminal identification information of the second terminal, wherein in the multimedia call information, terminal identification information of terminals by which the user participates in the multimedia calls is stored in association with call status information; and
determining, in response to that the multimedia call information comprises the terminal identification information of the second terminal, whether the second terminal is in a multimedia call according to the call status information stored in association with the terminal identification information of the second terminal in the multimedia call information.

8. The method according to claim 7, wherein a call status indicated by the call status information comprises any one of: a status of being in a multimedia call, a status of quitting from a multimedia call, a status of receiving a multimedia call initiated by another user, and a status of initiating a multimedia call to another user.

9. The method according to claim 7, further comprising:
determining that the second terminal is not in any multimedia call, in response to that the multimedia call information does not include the terminal identification information of the second terminal.

10. The method according to claim 7, wherein the multimedia call information is received from a server (501); and
the method further comprises:
sending, by the server, the multimedia call information to each terminal used by the user logged in the target application.

11. An apparatus for establishing a multimedia call, comprising:
A first determining unit (401), configured to determine (101) whether a second terminal (201) is in any multimedia call according to terminal identification information of the second terminal used by a user logged in a target application, in response to a target multimedia call (204) to be established in association with the user being triggered while a first terminal (202) used by the user logged in the target application is in a multimedia call, wherein a state of the first terminal being in the multimedia call is determined based on information of the multimedia call, wherein the information of the multimedia call comprises identification information of the first terminal in association with call status information of the first terminal, and wherein the target multimedia call is different from the multimedia call; and
an establishing unit (402), configured to establish (102) the target multimedia call based on an operation of answering the target multimedia call performed by a called party in response to determining that the second terminal is not in any multimedia call, wherein the multimedia call and the target multimedia call are conducted through the first terminal and the second terminal, respectively.

12. A computer program product comprising a computer program carried on a non-transitory computer readable medium, wherein the computer program includes program code for performing the method according to any one of claims 1 to 10.

13. A computer-readable storage medium, storing computer instructions, wherein the computer instructions, when being executed by a processor, cause the processor to perform the method according to any one of claims 1 to 10.

## Patentansprüche

1. Verfahren zum Aufbauen eines Multimedia-Anrufs, umfassend:
Bestimmen (101), ob sich ein zweites Endgerät (201) in einem Multimedia-Anruf befindet, basierend auf Endgerät-Identifikationsinformationen des zweiten Endgeräts, das von einem Benutzer in einer Zielanwendung angemeldet wurde, als Reaktion darauf, dass ein in Verbindung mit dem Benutzer aufzubauender Ziel-Multimedia-Anruf (204) ausgelöst wird, während sich ein erstes Endgerät (202), das von dem in der Zielanwendung angemeldeten Benutzer verwendet wird, in einem Multimedia-Anruf befindet, wobei ein Status des sich in dem Multimedia-Anruf befindlichen ersten Endgeräts basierend auf Informationen des Multimedia-Anrufs bestimmt wird, wobei die Informationen des Multimedia-Anrufs Identifikationsinformationen des ersten Endgeräts in Verbindung mit Anrufstatusinformationen des ersten Endgeräts umfassen und wobei sich der Ziel-Multimedia-Anruf von dem Multimedia-Anruf unterscheidet; und
Aufbauen (102) des Ziel-Multimedia-Anrufs auf der Grundlage einer Antwortoperation (205), die von einem angerufenen Teilnehmer des Ziel-Multimedia-Anrufs durchgeführt wird, als Reaktion auf das Bestimmen, dass sich das zweite Endgerät in keinem Multimedia-Anruf befindet, wobei der Multimedia-Anruf und der Ziel-Multimedia-Anruf jeweils über das erste Endgerät beziehungsweise das zweite Endgerät geführt werden.

2. Verfahren nach Anspruch 1, wobei das erste Endgerät im Multimedia-Anruf verbleibt, woraufhin das zweite Endgerät als Reaktion darauf den Ziel-Multimedia-Anruf aufbaut.

3. Verfahren nach Anspruch 2, wobei der Benutzer ein Initiator des Ziel-Multimedia-Anrufs ist; und
das Aufbauen des Ziel-Multimedia-Anrufs basierend auf einer Antwortoperation, die von einem angerufenen Teilnehmer des Ziel-Multimedia-Anrufs durchgeführt wird, Folgendes umfasst:
Senden einer Aufbauanforderung für den Ziel-Multimedia-Anruf an einen angerufenen Teilnehmer des Ziel-Multimedia-Anrufs, wobei ein vom angerufenen Teilnehmer des Ziel-Multimedia-Anrufs verwendetes Endgerät, das in der Zielanwendung angemeldet ist, als Reaktion auf die Aufbauanforderung, eine Eingabeaufforderung anzeigt, die angibt, dass der Benutzer den Ziel-Multimedia-Anruf an den angerufenen Teilnehmer initiiert; und
Aufbauen des Ziel-Multimedia-Anrufs als Reaktion auf eine vom angerufenen Teilnehmer anhand der Eingabeaufforderungsinformationen durchgeführte Antwortoperation.

4. Verfahren nach Anspruch 2, wobei der Benutzer der angerufene Teilnehmer des Ziel-Multimedia-Anrufs ist; und
das Aufbauen des Ziel-Multimedia-Anrufs basierend auf einem Antwortvorgang, der von einem angerufenen Teilnehmer des Ziel-Multimedia-Anrufs durchgeführt wird, Folgendes umfasst:
Anzeigen von Eingabeaufforderungsinformationen, die angeben, dass ein Initiator des Ziel-Multimedia-Anrufs den Ziel-Multimedia-Anruf an den Benutzer initiiert; und
Aufbauen des Ziel-Multimedia-Anrufs als Reaktion auf eine vom Benutzer anhand der Eingabeaufforderungsinformationen ausgeführte Antwortoperation.

5. Verfahren nach Anspruch 1, weiter umfassend:
Ablehnen des Aufbaus des Ziel-Multimedia-Anrufs als Reaktion darauf, dass sich das zweite Endgerät in einem Multimedia-Anruf befindet.

6. Verfahren nach einem der Ansprüche 1 bis 5, wobei der Ziel-Multimedia-Anruf in einem Eins-zu-Eins-Anrufmodus oder einem Eins-zu-Mehrfach-Anrufmodus erfolgt.

7. Verfahren nach einem der Ansprüche 1 bis 5, wobei das Bestimmen, ob sich das zweite Endgerät in einem Multimedia-Anruf befindet, gemäß Endgerät-Identifikationsinformationen des zweiten Endgeräts, das von einem in einer Zielanwendung angemeldeten Benutzer verwendet wird, Folgendes umfasst:
Bestimmen, ob Multimedia-Anrufinformationen von Multimedia-Anrufen, an denen der Benutzer teilnimmt, die Endgerät-Identifikationsinformationen des zweiten Endgeräts umfassen, wobei in den Multimedia-Anrufinformationen Endgerät-Identifikationsinformationen von Endgeräten, mit denen der Benutzer an den Multimedia-Anrufen teilnimmt, in Verbindung mit Anrufstatusinformationen gespeichert sind; und
und als Reaktion darauf, dass die Multimedia-Anrufinformationen die Endgerät-Identifikationsinformationen des zweiten Endgeräts umfassen, Bestimmen, ob sich das zweite Endgerät in einem Multimedia-Anruf befindet, und zwar gemäß den Anrufstatusinformationen, die in Verbindung mit den Endgerät-Identifikationsinformationen des zweiten Endgeräts in den Multimedia-Anrufinformationen gespeichert sind.

8. Verfahren nach Anspruch 7, wobei ein durch die Anrufstatusinformationen angegebener Anrufstatus einen der folgenden umfasst: einen Status, sich in einem Multimedia-Anruf zu befinden, einen Status des Verlassens eines Multimedia-Anrufs, einen Status des Empfangens eines von einem anderen Benutzer initiierten Multimedia-Anrufs und einen Status des Initiierens eines Multimedia-Anrufs zu einem anderen Benutzer.

9. Verfahren nach Anspruch 7, weiter umfassend:
Bestimmen, dass sich das zweite Endgerät in keinem Multimedia-Anruf befindet, als Reaktion darauf, dass die Multimedia-Anrufinformationen nicht die Endgerät-Identifikationsinformationen des zweiten Endgeräts einschließen.

10. Verfahren nach Anspruch 7, wobei die Multimedia-Anrufinformationen von einem Server (501) empfangen werden; und
das Verfahren weiter Folgendes umfasst:
Senden der Multimedia-Anrufinformationen durch den Server an jedes Endgerät, das vom in der Zielanwendung angemeldeten Benutzer verwendet wird.

11. Vorrichtung zum Aufbauen eines Multimedia-Anrufs, umfassend:
eine erste Bestimmungseinheit (401), die dafür konfiguriert ist, zu bestimmen (101), ob sich ein zweites Endgerät (201) in einem Multimedia-Anruf befindet, gemäß Endgerät-Identifikationsinformationen des zweiten Endgeräts, das von einem in einer Zielanwendung angemeldeten Benutzer verwendet wird, als Reaktion darauf, dass ein in Verbindung mit dem Benutzer aufzubauender Ziel-Multimedia-Anruf (204) ausgelöst wird, während sich ein erstes Endgerät (202) des in der Zielanwendung angemeldeten Benutzers in einem Multimedia-Anruf befindet, wobei ein Status des sich in dem Multimedia-Anruf befindlichen ersten Endgeräts basierend auf Informationen des Multimedia-Anrufs bestimmt wird, wobei die Informationen des Multimedia-Anrufs Identifikationsinformationen des ersten Endgeräts in Verbindung mit Anrufstatusinformationen des ersten Endgeräts umfassen und wobei sich der Ziel-Multimedia-Anruf von dem Multimedia-Anruf unterscheidet; und
eine Aufbaueinheit (402), die dafür konfiguriert ist, den Ziel-Multimedia-Anruf basierend auf einem Vorgang des Beantwortens des Ziel-Multimedia-Anrufs aufzubauen (102), der von einem angerufenen Teilnehmer als Reaktion auf das Bestimmen durchgeführt wird, dass sich das zweite Endgerät in keinem Multimedia-Anruf befindet, wobei der Multimedia-Anruf und der Ziel-Multimedia-Anruf jeweils über das erste Endgerät beziehungsweise das zweite Endgerät geführt werden.

12. Computerprogramm, das ein Computerprogramm umfasst, das auf einem nichtflüchtigen computerlesbaren Medium geführt wird, wobei das Computerprogramm Programmcode zum Durchführen des Verfahrens nach einem der Ansprüche 1 bis 10 einschließt.

13. Computerlesbares Speichermedium, das Computeranweisungen speichert, wobei die Computeranweisungen, wenn sie von einem Prozessor ausgeführt werden, den Prozessor veranlassen, das Verfahren nach einem der Ansprüche 1 bis 10 durchzuführen.

## Revendications

1. Procédé pour établir un appel multimédia, comprenant :
la détermination (101) du fait qu'un second terminal (201) est ou non en appel multimédia sur la base d'informations d'identification de terminal du second terminal connecté à une application cible par un utilisateur, en réponse à un appel multimédia cible (204) à établir en association avec l'utilisateur déclenché alors qu'un premier terminal (202) utilisé par l'utilisateur connecté à l'application cible est en appel multimédia, dans lequel un état du premier terminal étant en appel multimédia est déterminé sur la base d'informations de l'appel multimédia, dans lequel les informations de l'appel multimédia comprennent des informations d'identification du premier terminal en association avec des informations d'état d'appel du premier terminal, et dans lequel l'appel multimédia cible est différent de l'appel multimédia ; et
l'établissement (102) de l'appel multimédia cible sur la base d'une opération de réponse (205) effectuée par une partie appelée de l'appel multimédia cible, en réponse à la détermination que le second terminal n'est pas en appel multimédia, dans lequel l'appel multimédia et l'appel multimédia cible sont conduits respectivement par le premier terminal et le second terminal.

2. Procédé selon la revendication 1, dans lequel le premier terminal reste en appel multimédia, en réponse au fait que le second terminal établit l'appel multimédia cible.

3. Procédé selon la revendication 2, dans lequel l'utilisateur est un initiateur de l'appel multimédia cible ; et
l'établissement de l'appel multimédia cible sur la base d'une opération de réponse effectuée par une partie appelée de l'appel multimédia cible comprend :
l'envoi d'une demande d'établissement pour l'appel multimédia cible à une partie appelée de l'appel multimédia cible, dans lequel un terminal utilisé par la partie appelée de l'appel multimédia cible connecté à l'application cible affiche, en réponse à la demande d'établissement, des informations d'invite indiquant que l'utilisateur initie l'appel multimédia cible à la partie appelée ; et
l'établissement de l'appel multimédia cible en réponse à une opération de réponse effectuée par la partie appelée sur les informations d'invite.

4. Procédé selon la revendication 2, dans lequel l'utilisateur est la partie appelée de l'appel multimédia cible ; et
l'établissement de l'appel multimédia cible sur la base d'une opération de réponse effectuée par une partie appelée, l'appel multimédia cible comprend :
l'affichage d'informations d'invite indiquant qu'un initiateur de l'appel multimédia cible initie l'appel multimédia cible à l'utilisateur ; et
l'établissement de l'appel multimédia cible en réponse à une opération de réponse effectuée par l'utilisateur sur les informations d'invite.

5. Procédé selon la revendication 1, comprenant en outre :
le refus d'établir l'appel multimédia cible en réponse au fait que le second terminal est en appel multimédia.

6. Procédé selon l'une quelconque des revendications 1 à 5, dans lequel l'appel multimédia cible est dans un mode d'appel individuel ou un mode d'appel individuel à multiple.

7. Procédé selon l'une quelconque des revendications 1 à 5, dans lequel la détermination du fait que le second terminal est ou non en appel multimédia selon les informations d'identification de terminal du second terminal utilisé par un utilisateur connecté à une application cible comprend :
la détermination du fait que des informations d'appel multimédia d'appels multimédia auxquels participe l'utilisateur comprennent ou non les informations d'identification de terminal du second terminal, dans lequel dans les informations d'appel multimédia, les informations d'identification de terminal de terminaux par lesquels l'utilisateur participe aux appels multimédia sont stockées en association avec les informations d'état d'appel ; et
la détermination, en réponse au fait que les informations d'appel multimédia comprennent les informations d'identification de terminal du second terminal, du fait que le second terminal est ou non en appel multimédia selon les informations d'état d'appel stockées en association avec les informations d'identification de terminal du second terminal dans les informations d'appel multimédia.

8. Procédé selon la revendication 7, dans lequel un état d'appel indiqué par les informations d'état d'appel comprend l'un quelconque des éléments suivants : un état consistant à être en appel multimédia, un état consistant à quitter un appel multimédia, un état consistant à recevoir un appel multimédia initié par un autre utilisateur et un état consistant à initier un appel multimédia à un autre utilisateur.

9. Procédé selon la revendication 7, comprenant en outre :
la détermination du fait que le second terminal n'est pas en appel multimédia, en réponse au fait que les informations d'appel multimédia n'incluent pas les informations d'identification de terminal du second terminal.

10. Procédé selon la revendication 7, dans lequel les informations d'appel multimédia sont reçues d'un serveur (501) ; et
le procédé comprend en outre :
l'envoi, par le serveur, des informations d'appel multimédia à chaque terminal utilisé par l'utilisateur connecté à l'application cible.

11. Appareil pour établir un appel multimédia, comprenant :
une première unité de détermination (401), configurée pour déterminer (101) si un second terminal (201) est en appel multimédia en fonction d'informations d'identification de terminal du second terminal utilisé par un utilisateur connecté à une application cible, en réponse à un appel multimédia cible (204) à établir en association avec l'utilisateur déclenché alors qu'un premier terminal (202) utilisé par l'utilisateur connecté à l'application cible est en appel multimédia, dans lequel un état du premier terminal étant en appel multimédia est déterminé sur la base d'informations de l'appel multimédia, dans lequel les informations de l'appel multimédia comprennent des informations d'identification du premier terminal en association avec des informations d'état d'appel du premier terminal, et dans lequel l'appel multimédia cible est différent de l'appel multimédia ; et
une unité d'établissement (402), configurée pour établir (102) l'appel multimédia cible sur la base d'une opération de réponse à l'appel multimédia cible effectuée par une partie appelée en réponse à la détermination que le second terminal n'est pas en appel multimédia, dans lequel l'appel multimédia et l'appel multimédia cible sont conduits respectivement par le premier terminal et le second terminal.

12. Produit de programme informatique comprenant un programme informatique stocké sur un support non transitoire lisible par ordinateur, dans lequel le programme informatique inclut un code de programme pour réaliser le procédé selon l'une quelconque des revendications 1 à 10.

13. Support de stockage lisible par ordinateur, stockant des instructions informatiques, dans lequel les instructions informatiques, lorsqu'elles sont exécutées par un processeur, amènent le processeur à réaliser le procédé selon l'une quelconque des revendications 1 à 10.
